# EUROPEAN PATENT APPLICATION

(11) **EP 2 420 825 A2**
(43) Date of publication of application: **22.02.2012**
(21) Application number: 11159606.0
(22) Date of filing: 24.03.2011
(51) Int. Cl.: G01N 21/956

(54) **System and method for detecting solder paste printing**

(30) Priority: 15.04.2010 CN 201010150060
(71) Applicant: SIEMENS AKTIENGESELLSCHAFT, 80333 München (DE)
(72) Inventor: Galuschki, Klaus-Peter, 12487 Berlin (DE); Gong, Yi Hua, Shanghai 200023 (CN); Hu, Yu, Shanghai 200433 (CN); Shen, Ming, Shanghai 201203 (CN)

(57) **Abstract**

The present invention discloses a system and a method for detecting solder paste printing. The system comprises: a detecting device for detecting solder paste when a scraping blade pushes the solder paste to spread over a template to obtain information associated with the rolling speed of the solder paste; and a state-indicating device for generating a printing-state indication based on the information associated with the rolling speed of the solder paste. The method comprises: detecting the solder paste during rolling to obtain the information associated with the rolling speed of the solder paste; and generating a printing-state indication based on said information associated with the rolling speed of the solder paste. By detecting the solder paste during rolling to obtain the printing state, it is possible to monitor the printing state in real time, discover an abnormal condition in time, and reduce costs to the maximum extent.

## Description

### Technical Field

The present invention relates to solder paste printing technology and, in particular, to a system and a method for detecting solder paste printing.

### Background art

In electronic assembly technology, such as surface mount technology (SMT), solder paste printing, component mounting and reflow soldering process are the three primary processes. As the first process, the quality of the solder paste printing has significant influence on the quality of the electronic assembly.

There are many influencing factors on the quality of the solder paste printing, comprising: factors in the equipment aspect such as template, scraping blade, etc., factors in the technological parameter aspect such as printing speed, pressure, separating rate, and factors of the solder paste, such as solder paste viscosity, powder size, flow type, etc.

Currently, the printing quality is ensured mainly by selecting the parameters before printing and testing the printed circuit boards after printing. Before printing, equipment, technological parameters, and solder paste usually need to be selected and set, which can control the printing quality to a certain degree. However, during the printing process, many factors may result in printing defects. Therefore, after printing, the area and/or the volume of the solder paste already printed, and whether the position of the solder paste on the printed circuit board is appropriate, are detected inside or outside the printing machine using an automatic optic inspection method. Such a detection performed after printing is usually carried out after a plurality of printed circuit boards have been printed, and if a printing defect is detected, it is possible that many printed circuit boards have the same defect, which is highly disadvantageous to cost saving.

### Contents of the invention

The object of the present invention is to provide a system capable of detecting solder paste printing during a printing process, which can reduce costs.

A further object of the present invention is to provide a method capable of detecting solder paste printing during a printing process, which can reduce costs.

According to an embodiment of the present invention, a system for detecting solder paste printing comprises: a detecting device for detecting the solder paste when a scraping blade pushes the solder paste to spread over a template to obtain information associated with the rolling speed of the solder paste; and a state-indicating device for generating a printing-state indication based on said information associated with the rolling speed of the solder paste.

Preferably, said detecting device comprises: a light source for irradiating the solder paste surface; an imaging unit for obtaining an image of the solder paste surface at a predetermined sampling frequency, with said image being represented in the form of digital image matrices; a digital signal processing unit for comparing and analyzing the adjacent digital image matrices to obtain said information associated with the rolling speed of the solder paste, with said information associated with the rolling speed of the solder paste being the displacement information of the solder paste surface in the sampling time interval corresponding to said sampling frequency.

Preferably, said state-indicating device comprises: a processing unit for statistically processing the displacement information of said solder paste surface in the sampling time interval corresponding to said sampling frequency to obtain statistic values of said displacement information, and determining whether said printing state is normal by judging whether said statistic values are within a normal range; and an indicating unit for generating said printing-state indication.

Preferably, said state-indicating device is an alarm unit for generating an alarm signal when an abnormal printing state is determined.

Preferably, said state-indicating device further comprises: a storage unit for storing said statistic value in a way corresponding to time.

Preferably, said detecting device is an image collecting and processing chip used in an optical mouse or a laser mouse.

Preferably, said detecting device is kept unchanged at a position relative to said scraping blade and is not in contact with said solder paste.

According to an embodiment of the present invention, a method for detecting the quality of solder paste printing comprises: detecting the solder paste during rolling to obtain information associated with the rolling speed of the solder paste; and generating a printing-state indication based on said information associated with the rolling speed of the solder paste.

Preferably, detecting the solder paste during rolling to obtain information associated with the rolling speed of the solder paste comprises: obtaining an image of the solder paste surface at a predetermined sampling frequency, and representing said image as digital image matrices; comparing and analyzing the adjacent digital image matrices to obtain said information associated with the rolling speed of the solder paste, with said information associated with the rolling speed of the solder paste being the displacement information of the solder paste surface in a sampling time interval corresponding to said sampling frequency.

Preferably, generating a printing-state indication based on said information associated with the rolling speed of the solder paste comprises: processing statistically the displacement information of said solder paste surface in the sampling time interval corresponding to said sampling frequency to obtain statistic values of said displacement information, and determining whether or not the printing state is normal by judging whether or not said statistic values are within a normal range; and generating said printing-state indication.

Preferably, said printing-state indication is an alarm signal generated when an abnormal printing state is determined.

Preferably, said method further comprises: storing said rolling speed in a way corresponding to time.

The system and method for detecting solder paste printing according to the embodiments of the present invention obtain information associated with the rolling speed of the solder paste by detecting the solder paste when a scraping blade pushes the solder paste to spread over a template so as to generate a printing-state indication. In this way, an operator can monitor the printing state in real time. When an abnormal printing state is discovered, measures can be adopted in time to reduce costs to the maximum extent. Since the detecting device of the present invention is not in contact with the solder paste, the quality of the solder paste is not influenced during the detecting process. In the case of the detecting device of the present invention employing the image collecting and processing chip in an optical mouse or a laser mouse, such a chip has a small size and good performance in detecting displacement and can be directly purchased at low costs. Therefore, this type of detecting device can be mounted very easily on a printing machine, and be implemented at low costs.

### Brief description of the accompanying drawings

The above-mentioned and other features and advantages of the present invention will be made more apparent to those skilled in the art by the preferred embodiments of the present invention described in detail below with reference to the accompanying drawings, in which identical reference numbers refer to identical components, and in which:
Fig. 1 is a schematic diagram of detecting the solder paste printing by using a detecting system according to an embodiment of the present invention.
Fig. 2 is a schematic diagram of the structure of a detecting device according to an embodiment of the present invention.
Fig. 3 is a schematic diagram of the structure of a state-indicating device according to an embodiment of the present invention.
Fig. 4 is an overall flowchart of a method for detecting the solder paste printing according to an embodiment of the present invention.

### Exemplary embodiments

In order to make the technical solutions and advantages of the present invention more apparent, the present invention will be further described in detail in conjunction with the accompanying drawings and embodiments hereinbelow. It should be understood that the particular embodiments described herein are only for the explanation of the present invention and are not to limit the present invention.

In the solder paste printing technologies, the property of the solder paste changes with time, thus causing the printing quality of the solder paste to degrade, for example, the solder paste will become sticky and hard as time goes by, and this will affect the printing quality of the solder paste. An operator can observe the solder paste during rolling, and if he discovers that the property of the solder paste has changed to an extent that affects the printing quality, then measures can be adopted, for example to stop printing. However, the artificial visual examination method is affected by the ability and experience of the operator, and is subjective. Moreover, a printing machine often has a closed housing, making it impossible for the operator to observe directly the change of the solder paste property with the naked eye. Therefore, the artificial visual examination method is not suitable for use in a practical production process.

The present inventor has found that, when the property of the solder paste changes with time, the rolling speed of the solder paste pushed by a scraping blade on a template will also change, e. g. , the stickier the solder paste becomes, the slower the rolling speed of the solder paste. In some extreme cases, if the solder paste becomes very dry and hard, the solder paste may no longer roll, but is moved forward in translation under the pushing effects by the scraping blade. Accordingly, it is proposed in the present invention a system and a method capable of detecting the printing quality of the solder paste during the printing process. The key point of the system and the method according to the present invention is to detect the rolling solder paste when a scraping blade pushes the solder paste to spread over a template to obtain information associated with the rolling speed of the solder paste, and generating a printing-state indication based on the obtained information associated with the rolling speed of the solder paste. A user can find out whether or not the rolling of the solder paste on the template is normal by checking the printing-state indication, so as to infer whether the property of the solder paste is normal, and to judge therefrom whether the property of the solder paste at this moment can still ensure the printing quality. If the rolling speed of the solder paste detected exceeds a normal range, for example, less than a threshold value, then it indicates that the viscosity of the solder paste is no longer capable of ensuring the printing quality. At this moment, the operator can take measures immediately, for example, to stop and check the machine, etc., so as to discover a defect in good time during the printing process, and to reduce costs to the maximum extent.

The present invention will be described in detail hereinbelow with reference to the accompanying drawings in conjunction with the particular embodiments.

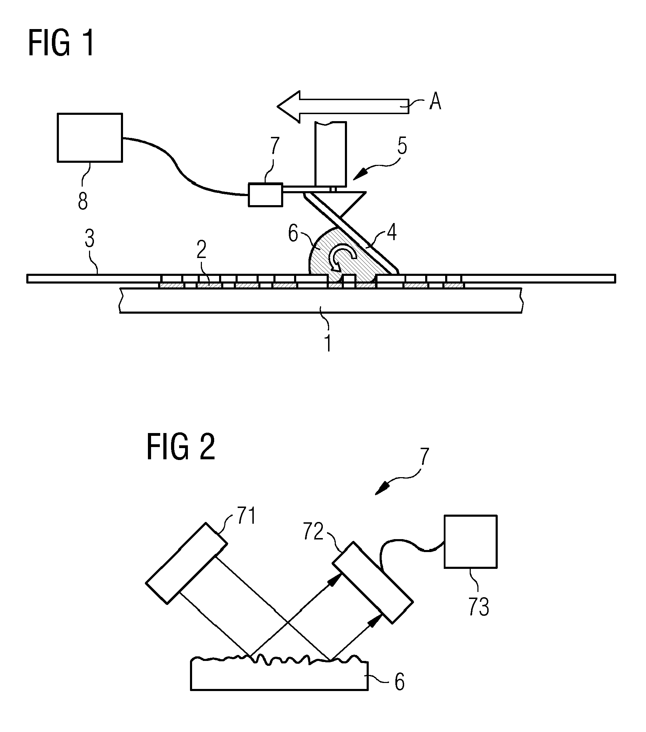

Fig. 1 is a schematic diagram of detecting the solder paste printing by using a detecting system according to an embodiment of the present invention.

Referring to Fig. 1, a printing system comprises: a base plate 1; pads 2 located on the base plate; a template 3 located on the pad and having through-holes corresponding to the pads; and a scraping blade 4, which pushes solder paste 6 to spread over the template 3 along a direction indicated by an arrow A in the figure under the driving of a power device 5.

A detecting system comprises: a detecting device 7 for detecting the solder paste 6 when the scraping blade 4 pushes the solder paste 6 to spread over the template 3 to obtain information associated with the rolling speed of the solder paste; and a state-indicating device 8 for generating a printing-state indication based on the information associated with the rolling speed of the solder paste obtained from the detecting device 7.

In this case, the base plate 1, the pads 2, the template 3, the scraping blade 4, and the power device 5 themselves are known to those skilled in the art, and are not the important points of the present invention, so they are not described in detail here. The following text focuses on the state-indicating device 8 and the detecting device 7, which form the detecting system.

The detecting device 7 is mounted in such a way that the detecting device 7 is kept unchanged at a position relative to the scraping blade 4 during the process of the scraping blade pushing the solder paste. In other words, the detecting device 7 can be mounted such that it is kept unchanged at a position relative to the rolling shaft of the solder paste 6. For example, the detecting device 7 can be mounted onto the power device 5, and can also be mounted on the scraping blade 4. Since the detecting device 7 is kept unchanged at a position relative to the scraping blade 4, that is to say, it is kept unchanged at a position relative to the rolling axis of the solder paste, the surface of the solder paste 6 will have a relative displacement with respect to the detecting device 7 during its rolling. The detecting device 7 obtains the displacement information of the solder paste surface in a certain time interval by detecting the solder paste during rolling, that is to say, it obtains the information associated with the rolling speed of the solder paste.

Fig. 2 is a schematic diagram of the structure of the detecting device 7 according to an embodiment of the present invention. Referring to Fig. 2, the detecting device 7 comprises: a light source 71, an imaging unit 72, and a digital signal processing unit 73.

The light source 71 is used to irradiate the surface of an object, so that the imaging unit 72 obtains the surface image information of the object at a certain sampling frequency, and the digital signal processing unit 73 compares the adjacent two images to obtain the displacement on the surface of the object. Here, the surface of the object is the surface of the solder paste.

In an embodiment, the light source 71 can be a light-emitting diode (LED). The light emitted by the light-emitting diode irradiates the surface of the object, so that the imaging unit 72 can obtain the image data of the surface of the object.

In another embodiment, the light source 71 is a laser device, such as a vertical-cavity surface-emitting laser (VCSEL). Next, the case in which the light source 71 is a laser device is taken as an example to describe the process of detecting the solder paste with the detecting device 7.

The laser emitted by the light source 71 irradiates the surface of the object (for example, the solder paste surface), interference fringes are generated on the surface of the object, and after the light spots formed are reflected, they are collected by the imaging unit 72 at a certain sampling frequency, and the imaging unit 72 performs binary processing on the collected images carrying the microstructure characteristics of the surface of the object to form digital image matrices, and transmits the digital image matrices to the digital signal processing unit 73 for processing. The imaging unit 72 can comprise a lens assembly and a CMOS image inductor. In this case, the resolution of the CMOS inductor and the sampling frequency determines the imaging quality.

The digital signal processing unit 73 performs processing by comparing and analyzing the two adjacent digital image matrices to judge the displacement (for example the magnitude and the direction of the displacement) of the surface of the object (such as the solder paste surface) relative to the detecting device 7 in a sampling time interval corresponding to the sampling frequency, so as to obtain the magnitude of the displacement Δx, Δy between the detecting device 7 and the surface of the object (such as the solder paste surface) in two orthogonal directions, such as in the x and y directions, and obtain the relative movement distance Δs by way of the displacement data. The data which has been processed by the digital signal processing unit 73 is input to a state-indicating device 8, and the state-indicating device 8 determines whether the printing state is normal according to the received data.

The detecting device 7 as described above can detect the solder paste under the condition of having no contact with the surface of the solder paste 6 to obtain the information associated with the rolling speed of the solder paste, for example, the displacement information of the solder paste surface in the sampling time interval corresponding to the sampling frequency. Particularly, in the case of using a laser device as the light source 71, since a laser is a coherent light and has a virtually single wavelength, and can maintain its strength and waveform even if it travels a long distance, the detecting device 7 can be separated from the solder paste surface by a further distance, and can obtain even sharper images, so as to enhance the accuracy of the measurement. Therefore, it is preferable for a laser device to be used as the light source 71 in the present invention.

In an embodiment, the detecting device 7 as shown in Fig. 2 is a chip widely used in a mouse which usually serves as the input device for a computer, particularly an image sampling and processing chip in an optical mouse or a laser mouse which employs a LED or a laser device as a light source. In other words, the image sampling and processing chip in the optical mouse or the laser mouse can be used directly as the detecting device 7.

The image sampling and processing chip in a mouse has a small size, but has an excellent property in detecting the relative movements between the mouse and an object, and it is a very well-established technology, so it can be purchased directly at low cost. Therefore, when the image sampling and processing chip for the optical mouse or the laser mouse is used as the detecting device 7, the detecting device 7 can be easily mounted in a printing machine to detect the rolling solder paste during printing, so as to obtain the information associated with the rolling speed of the solder paste.

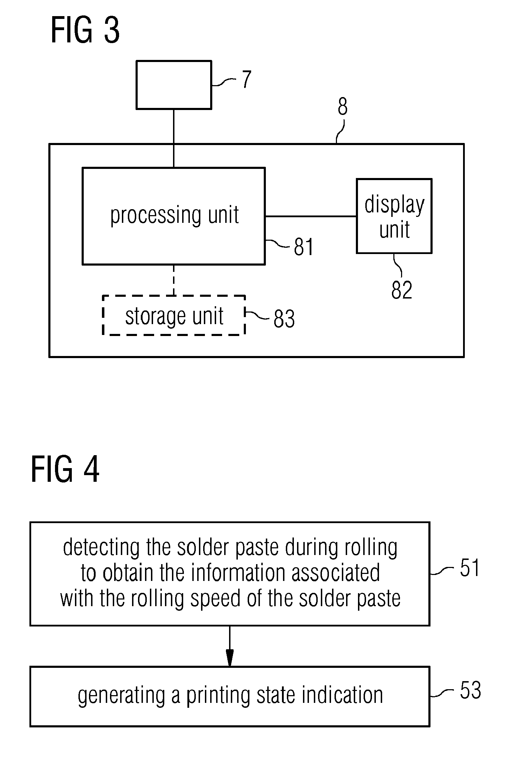

Fig. 3 is a schematic diagram of the state-indicating device according to an embodiment of the present invention. Referring to Fig. 3, the state-indicating device 8 comprises a processing unit 81, an indicating unit 82, and also a storage unit 83, if necessary.

The processing unit 81 receives the information associated with the rolling speed of the solder paste from the detecting unit 7, for example, the digital signal processing device 73 in the detecting unit 7.

The indicating unit 82 is used to generate a printing-state indication.

In an embodiment, the information associated with the rolling speed of the solder paste so obtained, such as the displacement information of the solder paste surface, is statistically processed so as to obtain statistic values associated with the rolling speed of the solder paste, and to generate the printing-state indication according to the statistic values.

For example, the obtained information associated with the rolling speed of the solder paste can be statistically processed as follows: dividing the obtained displacement information into groups, carrying out a statistic calculation for the displacement information in each group to determine statistic values (such as the average value, the median value, the standard error, etc.) of the displacement data, and obtaining the statistic values of the rolling speed according to the obtained statistic values and the sampling time interval. Giving a more specific example, and assuming M displacement data (the sampling frequency is (M+1) frames/second) are received per second, the M displacement data are divided into N groups, then the average value, the median value, the standard error and the like are evaluated for the (M/N) data of each group to obtain the statistic values of the displacement data, and then the statistic values of the rolling speed of the solder paste can be obtained according to these statistic values and the sampling time interval (corresponding to the sampling frequency). Since the sampling time interval is kept constant, the sampling time interval can also be considered as the unit time, and the calculated statistic values of the displacement data can directly represent the statistic values associated with the rolling speed of the solder paste. In this way, N statistic values associated with the rolling speed of the solder paste can be obtained per second.

The statistic values associated with the rolling speed of the solder paste produced in the above way can be presented to a user in the form of a diagram of a curve in real time by a human-computer interface as a printing-state indication. The user can find out the changing trend of the rolling speed of the solder paste by checking the diagram of the curve.

In another embodiment, the statistic values associated with the rolling speed of the solder paste produced by the statistic calculation can be compared with a threshold value, and if the statistic values are greater than the threshold value, then a normal printing state is determined; and if the statistic values are smaller than the threshold value, then an abnormal printing state is determined. As another example, it can be judged whether the statistic values associated with the rolling speed of the solder paste are in a range defined by a minimum value and a maximum value, and if it is true, then the a normal printing state is determined, and if not, an abnormal printing state is determined. For various methods for calculating statistic values and particular ways of applying the various statistic values reference can be made to the related prior art in this field, and they are known to those skilled in the art, so they are not described in detail here

The printing-state indication can be the diagram of the curve displayed in real time as mentioned above, and can also be the normal printing-state indication or the abnormal printing-state indication. The printing-state indication can also be an alarm signal, that is to say, in case of determining a normal printing state, the alarm signal is not produced, and in case of an abnormal printing state, the alarm signal is generated by the indicating unit.

For example, the indicating unit 82 can be a human-computer interface, but the invention is not limit to this. The indicating unit 82 can also indicate whether the printing state is normal by means of a signal light or a sound, e.g., the light being off represents a normal printing state, and the light being on represents an abnormal state; as another example, the light being green represents a normal printing state, and the light being red represents an abnormal printing state; as yet another example, in the case of an abnormal printing state, an alarm sound represents an abnormal printing state. The printing-state indication can also be a combination of the above cases. For example, whether the printing state is normal can be displayed in real time in the human-computer interface, and when the printing state is abnormal, the alarm light is on or the alarm sound is produced to inform the user.

In an embodiment of the present invention, the state indicating unit 8 can further comprise a storage unit 83. The storage unit 83 can store the statistic value associated with the rolling speed of the solder paste calculated by the processing unit 81 in a way corresponding to time to form a historical database, so as to generate by the processing unit 81 a curve diagram of the rolling speed of the solder paste changing with time as necessary, to facilitate the study of the change of the rolling speed of the solder paste with time.

The processing unit 81 mentioned above can be realized by software installed in a computer. The indicating unit 82 mentioned above can be a human-computer interface in a computer. The storage unit 83 mentioned above can be a storage in a computer. That is to say, the state indicating unit 8 mentioned above can be realized by a computer. In this case, the detecting device 7 mentioned above, such as an image collecting and processing chip in an optical mouse or a laser mouse, can be connected to the computer by a USB data line to send the obtained information associated with the rolling speed of the solder paste to the state-indicating device 8.

The detection of the solder paste surface using the detecting device 7 to obtain the information associated with the rolling speed of the solder paste is described above. It can be understood that one detecting device can be used to detect one position of the solder paste to obtain the information associated with the rolling speed of the solder paste at this position, and a plurality of detecting devices can also be used to detect different positions of the solder paste to obtain the information associated with the rolling speed of the solder paste at the different positions. For example, if the solder paste is a long stripe in shape, then the detecting devices can be mounted respectively in the middle and the ends of the striped solder paste to get respectively the information associated with the rolling speed of the solder paste in the middle location and at the end locations. In practical printing, two scraping blades are often used in two opposite directions to push the solder paste to spread over a template back and forth. In this way, one detecting device can be mounted for each scraping blade to detect respectively the solder paste in two opposite directions, so as to carry out on-line detection during the whole printing process.

In one embodiment, in the case of a plurality of detecting devices 7 being mounted in one and the same printing direction to detect respectively the rolling speeds of the solder paste at different positions, the information associated with the rolling speed of the solder paste obtained from each detecting device 7 can be input respectively to the state-indicating device, and the processing unit 81 in the state-indicating device 8 can process the information associated with rolling speed of the solder paste obtained from each detecting device 7, and determine the printing state for each location.

In another embodiment, in case of a plurality of detecting devices 7 being mounted in one and the same printing direction to detect respectively the rolling speeds of the solder paste at different positions, the information associated with the rolling speed of the solder paste obtained from each detecting device 7 can be inputted simultaneously to the state-indicating device 8, and the processing unit 81 in the state-indicating device can statistically process the obtained rolling information for the solder paste at different positions, for example, picking the average and the median, etc., and determine the printing state according to the obtained statistic values.

The system for detecting the quality of solder paste printing according to the embodiments of the present invention is described by reference to Figs. 1 to 3 above. Hereinbelow, a method for detecting solder paste printing according to the embodiments of the present invention is described by reference to the accompanying drawings.

Fig. 4 shows an overall flowchart for a method capable of detecting solder paste printing during a printing process according to an embodiment of the present invention. Referring to Fig. 4 , the method comprises: detecting the solder paste during rolling to obtain information associated with the rolling speed of the solder paste; and generating a printing-state indication based on said information associated with the rolling speed of the solder paste.

In an embodiment, an image of the solder paste surface during rolling can be obtained at a predetermined sampling frequency and said image is represented as digital image matrices; the adjacent digital image matrices are compared and analyzed to obtain the displacement information of the solder paste surface in the sampling time interval, i.e., the information associated with the rolling speed of the solder paste. In which, the sampling time interval corresponds to the sampling frequency.

In an embodiment, the obtained displacement information of the solder paste surface in the sampling time interval can be statistically processed to obtain statistic values of said displacement information, and the printing state is determined by judging whether said statistic values are within a normal range; and a printing-state indication is generated. For example, an alarm signal can be generated when an abnormal printing state is determined. The alarm signal warns an operator of an abnormal printing state. For the particular ways of determining the printing state and generating the printing-state indication reference can be made to the above description in conjunction with the system, and they are not repeated here.

In an embodiment, the abovementioned calculated statistic values can be stored in a way corresponding to time. If necessary, a curve diagram of the rolling speed changing with time can be generated to observe the changing trend of the rolling speed with time.

The system and method for detecting the solder paste printing as described above obtain the information associated with the rolling speed of the solder paste by detecting the relative displacement occurring between the solder paste surface and the detecting device, and they are independent of the type and material of the solder paste itself, so they can be applied to solder paste of any type and material.

In practical applications, the abovementioned detecting system can be integrated into a printing machine, so as to be sold with the printing machine; or can be a system for upgrading a printing machine, and is sold independently.

What are described above are only the preferred embodiments of the present invention and are not intended to limit the present invention, and any modification, equivalent, improvement, etc. made in the spirit and principles of the present invention shall be included in the protective scope of the present invention.

## Claims

1. A system for detecting solder paste printing, comprising:
a detecting device (7) for detecting solder paste (6) when a scraping blade (4) pushes the solder paste (6) to spread over a template (3) to obtain information associated with the rolling speed of the solder paste; and
a state-indicating device (8) for generating a printing-state indication based on said information associated with the rolling speed of the solder paste (6).

2. The system according to claim 1, wherein said detecting device (7) comprises:
a light source (71) for irradiating the solder paste surface;
an imaging unit (72) for obtaining an image of the solder paste surface at a predetermined sampling frequency, said image being represented in the form of digital image matrices; and
a digital signal processing unit (73) for comparing and analyzing the adjacent digital image matrices to obtain said information associated with the rolling speed of the solder paste (6), with said information associated with the rolling speed of the solder paste being the displacement information of the solder paste surface in a sampling time interval corresponding to said sampling frequency.

3. The system according to claim 2, wherein said state-indicating device (8) comprises:
a processing unit (81) for statistically processing the displacement information of said solder paste surface in the sampling time interval corresponding to said sampling frequency to obtain statistic values of said displacement information and determining whether or not said printing state is normal by judging whether or not said statistic values are within a normal range; and
an indicating unit (82) for generating said printing-state indication.

4. The system according to claim 3, wherein said indicating unit is an alarm unit for generating an alarm signal when an abnormal printing state is determined.

5. The system according to claim 3, wherein said state-indicating device further comprises:
a storage unit (83) for storing said statistic value in a way corresponding to time.

6. The system according to claim 1, wherein said detecting device is an image collecting and processing chip used in an optical mouse or a laser mouse.

7. The system according to any one of claims 1 to 6, wherein said detecting device is kept unchanged at a position relative to said scraping blade and is not in contact with said solder paste.

8. A method for detecting solder paste printing, comprising:
detecting the solder paste (6) during rolling to obtain the information associated with the rolling speed of the solder paste; and
generating a printing-state indication based on said information associated with the rolling speed of the solder paste.

9. The method according to claim 8, wherein detecting the solder paste (6) during rolling to obtain information associated with the rolling speed of the solder paste (6) comprises:
obtaining images of the solder paste surface at a predetermined sampling frequency, and representing said images as digital image matrices;
comparing and analyzing the adjacent digital image matrices to obtain said information associated with the rolling speed of the solder paste (6), with said information associated with the rolling speed of the solder paste (6) being the displacement information of the solder paste surface in a sampling time interval corresponding to said sampling frequency.

10. The method according to claim 9, wherein generating a printing-state indication based on said information associated with the rolling speed of the solder paste comprises:
processing statistically the displacement information of said solder paste surface in the sampling time interval corresponding to said sampling frequency to obtain statistic values of said displacement information, and determining whether or not the printing state is normal by judging whether or not said statistic values are within a normal range; and
generating said printing-state indication.

11. The method according to claim 10, wherein said printing-state indication is an alarm signal generated when an abnormal printing state is determined.

12. The method according to claim 10, further comprising: storing said rolling speed in a way corresponding to time.
